# FASCICULE DE BREVET EUROPEEN

(11) **EP 3 204 529 B1**
(45) Date de publication et mention de la délivrance du brevet: **24.01.2024**
(21) Numéro de dépôt: 15788461.0
(22) Date de dépôt: 16.09.2015
(51) Int. Cl.: C22C 38/00, C22C 38/40, C22C 38/44, C22C 38/46, C22C 38/48, C22C 38/50, C21D 6/00, C21D 6/02, C21D 9/08, C22C 38/02, C22C 38/04

(54) **PROCÉDÉ DE FABRICATION D'UN ALLIAGE POUR TUBE DE REFORMAGE**
VERFAHREN ZUR HERSTELLUNG EINER LEGIERUNG FÜR EIN REFORMIERUNGSROHR
METHOD FOR PRODUCING AN ALLOY FOR A REFORMING TUBE

(30) Priorité: 08.10.2014 FR 1459653
(43) Date de publication de la demande: 16.08.2017
(73) Titulaire: L'Air Liquide, Société Anonyme pour l'Etude et l'Exploitation des Procédés Georges Claude, 75007 Paris (FR)
(72) Inventeur: FRACZKIEWICZ, Anna, F-42023 Saint Etienne (FR); MAMINSKA, Karolina, F-42100 Saint Etienne (FR); DEL-GALLO, Pascal, F-91410 Dourdan (FR); FURTADO, Jader, F-78570 Andresy (FR); GARY, Daniel, F-78180 Montigny le Bretonneux (FR)
(74) Mandataire: Air Liquide
(86) Numéro de dépôt international: PCT/FR2015/052483
(87) Numéro de publication internationale: WO 2016/055710

(56) Documents cités:
- THOMAS C W ET AL: "Microstructure and properties of alloy HP50-Nb: comparison of as cast and service exposed materials", MATERIALS SCIENCE AND TECHNOLOGY INST. MATER. UK, vol. 12, no. 6, juin 1996 (1996-06), pages 469-475, XP008176599, ISSN: 0267-0836
- BARBABELA G D ET AL: "Phase characterization in two centrifugally cast HK stainless steel tubes", MATERIALS CHARACTERIZATION, ELSEVIER, NEW YORK, NY, US, vol. 26, no. 1, 1 janvier 1991 (1991-01-01), pages 1-7, XP024175770, ISSN: 1044-5803, DOI: 10.1016/1044-5803(91)90002-L [extrait le 1991-01-01]
- SOURMAIL T: "Precipitation in creep resistant austenitic stainless steels", MATERIALS SCIENCE AND TECHNOLOGY, LONDON, GB, vol. 17, no. 1, 1 janvier 2001 (2001-01-01), pages 1-14, XP008083470,
- XU N ET AL: "High temperature corrosion of cast heat resisting steels in CO+CO2 gas mixtures", CORROSION SCIENCE, OXFORD, GB, vol. 50, no. 8, 1 août 2008 (2008-08-01), pages 2398-2406, XP025625880, ISSN: 0010-938X, DOI: 10.1016/J.CORSCI.2008.06.001 [extrait le 2008-06-12]

## Description

La présente invention concerne un procédé de fabrication d'un alliage de fer, de nickel et de chrome avec une microstructure stable., en particulier dans des conditions de températures élevées (900-1050°C) et/ou de pressions élevées (10-40 bars), plus précisément, elle concerne un procédé de fabrication d'un alliage de fer, de nickel et de chrome, pour tube de reformeurs présentant ce type de microstructure.

Les alliages de ce type peuvent être utilisés pour la fabrication des tubes de reformage pour la production de gaz de synthèse (un mélange de H2 et de CO), mais également pour la fabrication de fours par exemple des fours de traitement thermiques. Les tubes de reformage sont remplis de catalyseur au nickel supporté sur alumine. La réaction de décomposition du méthane est endothermique et a besoin d'une source de chaleur externe, qui est généralement installée à l'intérieur d'une chambre de combustion équipée de brûleurs. Ces conditions de fonctionnement imposent deux exigences principales aux tubes de reformage, à savoir les tubes doivent être résistants à l'oxydation à haute température et le plus important à la déformation par fluage. Actuellement, les installations utilisent des tubes standards où la microstructure n'est pas contrôlée ou stabilisée malgré les conditions sévères de température et de pression.

Dans ces conditions sévères, l'alliage peut vieillir rapidement ce qui entraînera une rupture prématurée et donc une perte de production du gaz de synthèse associée souvent à des amendes versées par le client pour la fourniture ininterrompue d'hydrogène et de monoxyde de carbone.

Autrement dit les alliages des tubes de reformage présentent une résistance au fluage limitée s'il est exposé à des températures supérieures à 900°C.

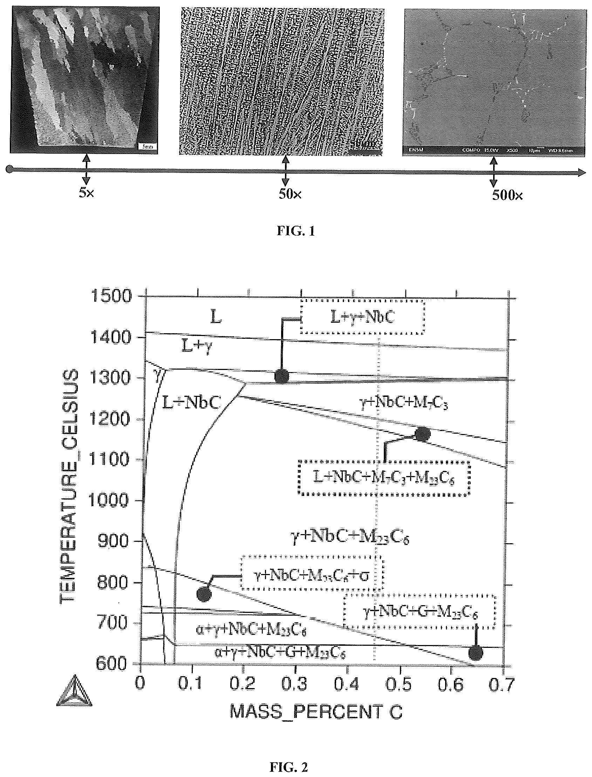

La microstructure de l'alliage est très complexe et ses constituants apparaissent à différentes échelles comme démontre la Figure 1. Sur le niveau macroscopique, les grains de ce type l'alliage sont parfois de type colonnaire et équiaxe ou de type colonnaire seulement mais de taille millimétrique. Sur le niveau microscopique, aux limites des cellules dendritiques se trouve un réseau de carbures primaires. Due à l'instabilité de la microstructure initiale en service, une fine précipitation secondaire se produit dans la cellule eutectique qu'est une matrice austénitique. Compte tenu des conditions de service, deux mécanismes de fluage peuvent intervenir : le fluage diffusion et le fluage dislocations. L'optimisation microstructurale consiste à maîtriser le processus de précipitation lors du service puisque de fins précipités secondaires agissent comme une barrière au mouvement de dislocations et de cette façon promouvoir un ralentissement de phénomène de déformation par le fluage.

La microstructure typique de ces alliages à l'état brut, est une matrice austénitique comprenant des précipités primaires intergranulaires à structure eutectique tels que le carbures de chrome de type M₇C₃ (M=Fe, Ni, Cr), M₂₃C₆ (M=Fe, Ni, Cr), et des carbures de niobium et de titane de type MCN (M=Nb, Ti).

Le document THOMAS C W et AL : « Microstructure and properties of alloy HP50-Nb : comparison of as cast and service exposed materials ; Material science and tecchnology inst. MATER.UK, vol. 12.N°6, pages 469-475 » divulgue un procédé de fabrication d'un alliage de fer, de nickel et de chrome, pour tube de reformeurs, comprenant de 24 à 28% en poids de Cr, de 33 à 37% en poids de Ni, et de 0,35 à 0,75% en poids de C et présentant une structure avec une matrice austénitique telle que :
i) Des précipités primaires micrométriques sous la forme de carbures de type M₂₃ C₆ avec M=Fe, Ni ou Cr et/ou de type M(C,N) avec M=Nb ou Ti se forment pendant la solidification de l'alliage ;
ii) Des précipités secondaires nanométriques sous la forme de carbures de type M₂₃ C₆ avec M=Fe, Ni ou Cr et/ou de type M(C,N) avec M=Nb ou Ti se forment pendant la mise en service du tube ; et
iii) Des précipités intermétalliques de type Ni Si₁₇ Nb₆ se forment pendant l'utilisation du tube.

Partant de là, un problème qui se pose est de fournir un alliage présentant une meilleure microstructure permettant de mieux résister aux températures et pressions élevées.

Une solution de la présente invention est un procédé de fabrication d'un alliage de fer selon la revendication 1.

Notons que la phase G (Ni₁₆Si₇Nb₆) est considérée comme néfaste car elle dégrade la résistance mécanique au fluage à des températures de procédés de reformage.

Selon le cas, la microstructure peut présenter une ou plusieurs des caractéristiques suivantes :
- les précipités secondaires forment des clusters de dislocations. De cette façon ils se dispersent dans la matrice austénitique.
- les précipités primaires sont micrométriques.
- les précipités secondaires sont nanométriques.
- les précipités secondaires sont compris entre 5 nm et 50 nm, de préférence entre 10 nm et 20 nm.
- les précipités primaires de type M₂₃C₆ représente 3 à 8% de la composition chimique de l'alliage et les précipités de M(C,N) représente 0,5 à 2,5% de la composition chimique de l'alliage.
- les précipités secondaires de type M₂₃C₆ représente 1 à 3% de la composition chimique de l'alliage et les précipités de M(C,N) représente 0,1 à 0,5 % de la composition chimique de l'alliage.

Les caractéristiques des précipités présents dans la microstructure sont indiquées dans le Tableau 1 ci-dessous:

**Tableau 1 Caractéristiques de la microstructure d'alliage de cette invention**

| **Caractéristiques** | **Précipité primaire** | **Précipité secondaire** |
|---|---|---|
| **Morphologie** | discontinue | discontinue |
| **Distribution** | délimite la cellule eutectique | dans la cellule eutectique ou intradendritique |
| **Chimie** | M₇C₃ (M=Fe, Ni, Cr) | M₂₃C₆ (M=Fe, Ni, Cr) |
| | M₂₃C₆ (M=Fe, Ni, Cr) | M(C,N) (M=Nb, Ti) |
| | M(C,N) (M=Nb, Ti) | |
| **Taille** | µm | nm |
| **Quantité** (en fonction de la composition chimique d'alliage) | M₂₃C₆ : 4 à 8% | M₂₃C₆ : 1 à 3 % |
| | M(C,N) : 1 à 3% | M(C,N) : 0.1 à 0,5% |

L'alliage de fer, de nickel et de chrome présente une microstructure comprenant de 22 à 30% en poids de Cr, de 20 à 45% en poids de Ni, et de 0,3 à 0,6% en poids de C. De préférence, l'alliage comprendra les teneurs des éléments chimiques comme indiquées dans le Tableau 2 ci-dessous.

**Tableau 2 Composition chimique des alliages ciblés (en % massique)**

| **Elément chimique** | | **Gamme opérationnel** | | **Gamme préférable** | | **Gamme plus préférable** | |
|---|---|---|---|---|---|---|---|
| | C | | 0,3 à 0,6 | | 0,38 à 0,55 | | 0,43 |
| | Ni | | 20 à 45 | | 30 à 38 | | 35 |
| | Cr | | 22 à 30 | | 23 à 28 | | 25 |
| | Mn | | 0,5 à 1,2 | | 0,6 à 1,0 | | 0,7 |
| | Si | | 0,5 à 1,1 | | 0,7 à 0,9 | | 0,8 |
| | Nb | | 0,5 à 1,5 | | 0,7 à 1,3 | | 1,0 |
| | Ti | | 0,05 à 0,7 | | 0,1 à 0,7 | | 0,3 |
| | W | | 0,05 à 0,5 | | 0,1 à 0,3 | | 0,2 |
| | Mo | | 0,05 à 0,5 | | 0,1 à 0,3 | | 0,2 |
| | V | | 0,05 à 0,3 | | 0,05 à 0,2 | | 0,1 |

La présente invention donne comme exemple d'alliage obtenu par le procédé de la présente invention un alliage C avec un teneur en carbone de 0,45% en poids (Tableau 3). La Figure 2 correspond au diagramme de phase d'équilibre de cet alliage C. L'alliage C est stable au dessus de 670°C en configuration cristallographique de la phase austénitique et instable au dessous de la température à laquelle il est en configuration de type ferrite. Au cours du refroidissement de l'alliage C on observe les précipités des carbures suivants : NbC et les carbures de chrome M₇C₃ et M₂₃C₆. La phase G, un siliciure avec la stoechiométrie de Ni₁₆Si₇Nb₆ est stable seulement à une température inférieure à 650°C. La phase G est considérée comme néfaste, elle dégrade la résistance mécanique à des températures de procédés de reformage.

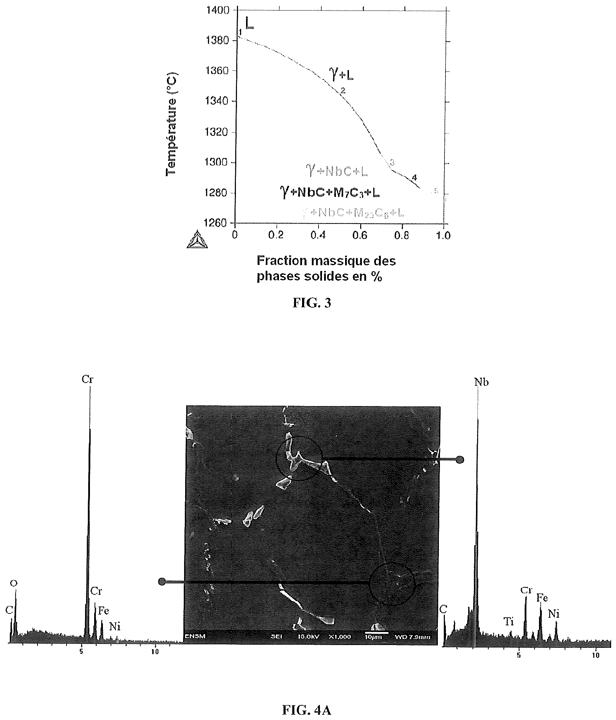

Dans la Figure 3, il est représenté la cinétique de solidification de l'alliage C suivant la méthode Scheil Gulliver. La précipitation de NbC se produit tout d'abord, suivie par les carbures de chrome. Cette prédiction a été confirmée par des observations métallographiques d'échantillons de l'alliage C.

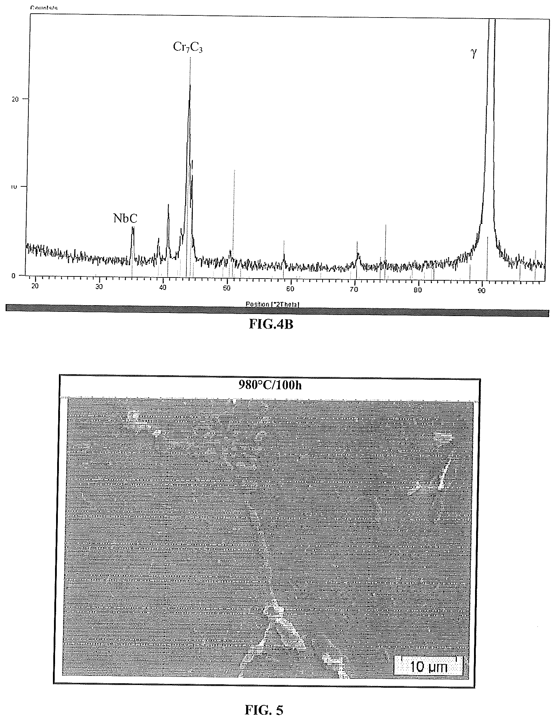

Les observations microscopiques confirment la présence de deux carbures primaires dans la microstructure initiale de l'alliage C (Figures 4A et 4B). La diffraction de rayons X sur un échantillon massif et sur une poudre de résidus (obtenue par une dissolution électrolytique de la matrice) démontre que la microstructure de l'alliage à l'état coulé est constituée de l'austénite, du NbC et du M₇C₃. De plus, une analyse des carbures par l'EBSD (diffraction des électrons rétrodiffusés) confirme que les carbures de chrome sont de type M₇C₃.

La vitesse de solidification lors de la fabrication de tubes étant importante, la microstructure attendue ne présente que des carbures primaires riches en Cr type M₇C₃ et des carbures primaires riches en Nb type MC que délinéent les cellules eutectiques dans la matrice austénitique. Aucun carbure secondaire n'a été observé à cette échelle d'observation dans la matrice austénitique ou à coté des carbures primaires. Jusqu'à aujourd'hui ces alliages ne sont pas traités thermiquement pour stabiliser la microstructure pendant la mise-en service du produit final. Ce n'est que lors du service à 980°C que les carbures de type M₇C₃ peuvent se transformer en M₂₃C₆, le seul stable carbure de chrome en dessous de 1170°C (Figure 2, diagramme des phases). Cette transformation libérant le carbone (le M₇C₃ en contient plus que le M₂₃C₆), en même temps, on observe une fine précipitation secondaire dans des cellules dendritiques (Figure 5).

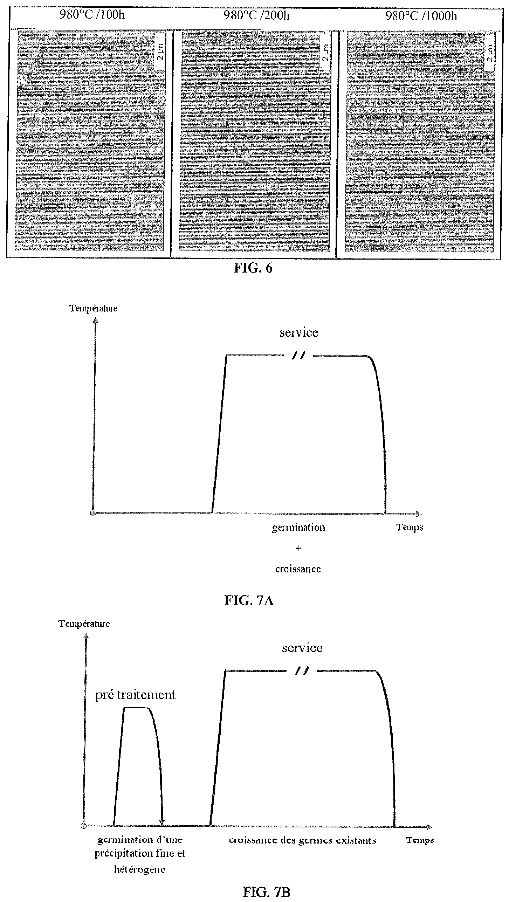

Les observations microscopiques des états vieillis à 980°C démontrent qu'à cette température la précipitation secondaire du M₂₃C₆ se produit très rapidement. La taille moyenne des précipités ne change presque pas au cours du temps (Figure 6) et au bout de 100, 200 et 1000 heures de vieillissement les précipités font moyennement 350nm. Il en résulte qu'après des périodes relativement courtes de vieillissement la précipitation secondaire commence à subir la coalescence ce qui diminue la tenue en fluage de l'alliage. Dans l'état de l'art actuel, ces alliages sont soumis à des vieillissements pendant leur utilisation en service sans aucun contrôle, tel que l'achèvement de la germination et de la croissance des précipités par accident.

Afin de diminuer des effets de la coalescence il faut modifier la microstructure en augmentant le nombre de germes en faisant un pré traitement thermique. Il s'agit d'une modification microstructurale avant l'entrée en service de l'alliage. Le concept d'un pré traitement est présenté schématiquement sur les Figures 7A et 7B. L'étape de germination étant décisif, il s'agit de créer des germes solides lors d'un pré traitement qui n'auront qu'à croître lors du service.

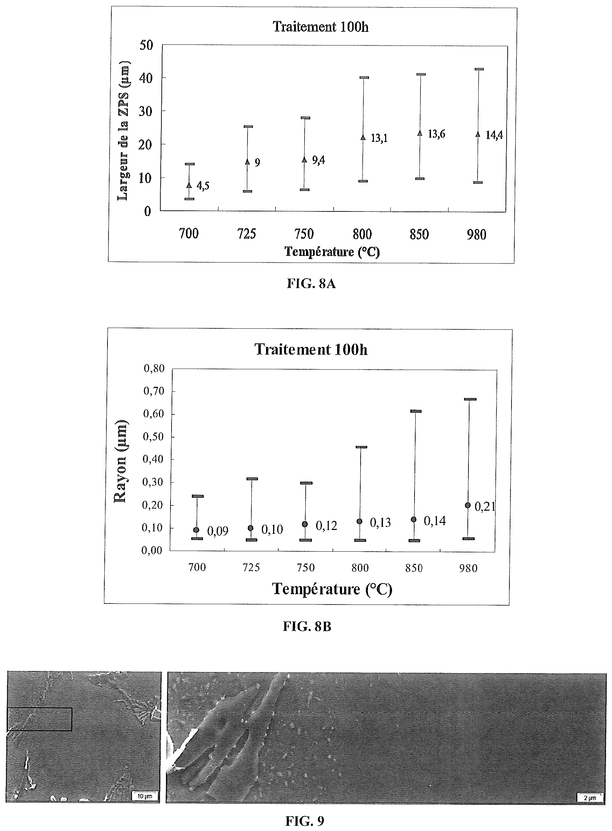

En choisissant des conditions d'un prétraitement, deux critères ont été pris : la taille de précipités, qui doit être faible, et la largeur de la zone de précipitation secondaire, qui doit être importante (Figures 8A et 8B).

La présente invention propose donc de séparer ces deux phénomènes avec un prétraitement réalisé dans des plages de températures moins élevées que la température utilisé en service, comme est montré schématiquement par les Figures 7A et 7B et compléter la précipitation une fois l'alliage mis en service.

En effet, il s'agit de fixer les conditions du traitement thermique que permettront de stabiliser la microstructure avec une précipitation fine des carbures secondaires riche en Cr type M₂₃C₆ (M=Fe, Ni, Cr) et d'autres carbures riche en Nb type MC (M=Nb, Ti).

Lors du traitement thermique, suite à la transformation des carbures primaires, le carbone est envoyé vers le centre de cellules et on y observe une fine précipitation secondaire. Cependant, après des vieillissements courts la zone de précipitation secondaire est limitée et on ne l'observe qu'à proximité d'anciens carbures primaire de chrome (Figure 9).

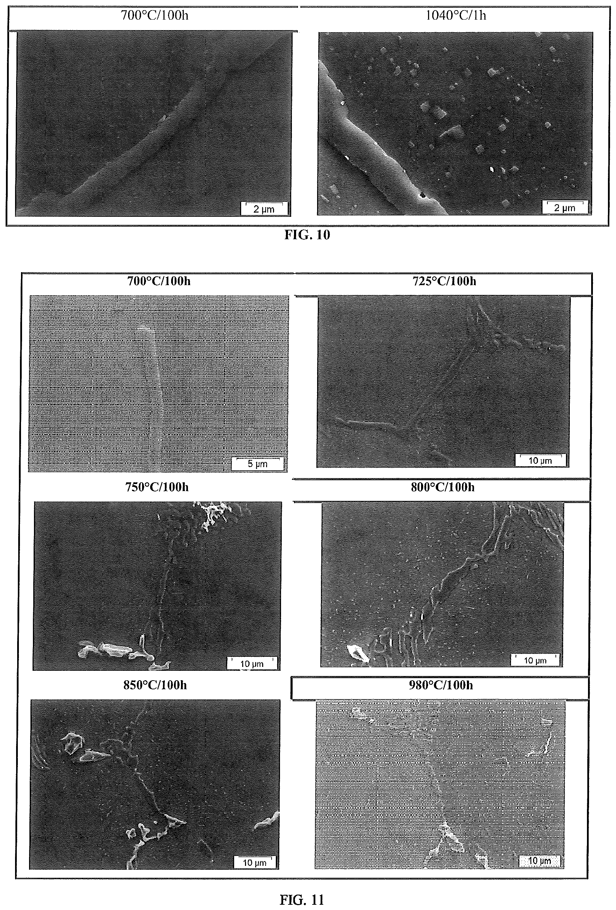

La cinétique de transformation des carbures M₇C₃ -> M₂₃C₆ change en fonction de la température. Elle contrôle également la cinétique de précipitation secondaire. La Figure 10 présente l'état de microstructure au bout de 100 heures de vieillissement à 700°C et au bout d'une heure à 1040°C.

La Figure 11 présente l'influence d'un vieillissement durant 100 heures dans une gamme de températures s'étendant de 700 à 980°C sur la taille de précipités. Notons que la zone de précipitation secondaire s'élargit avec la température.

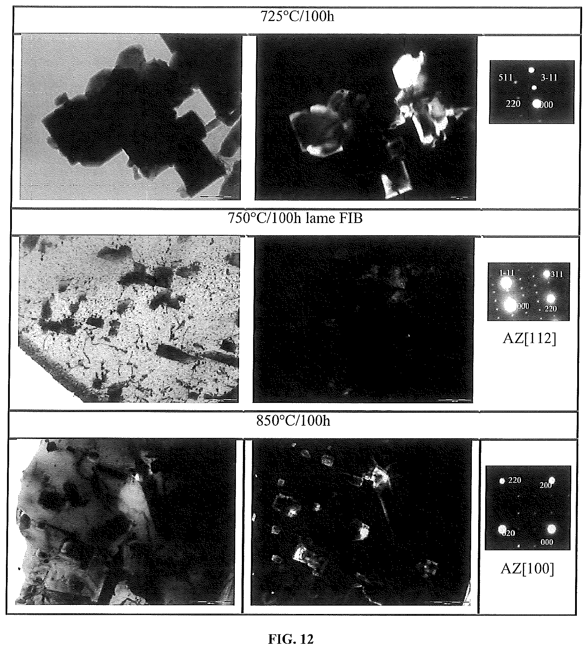

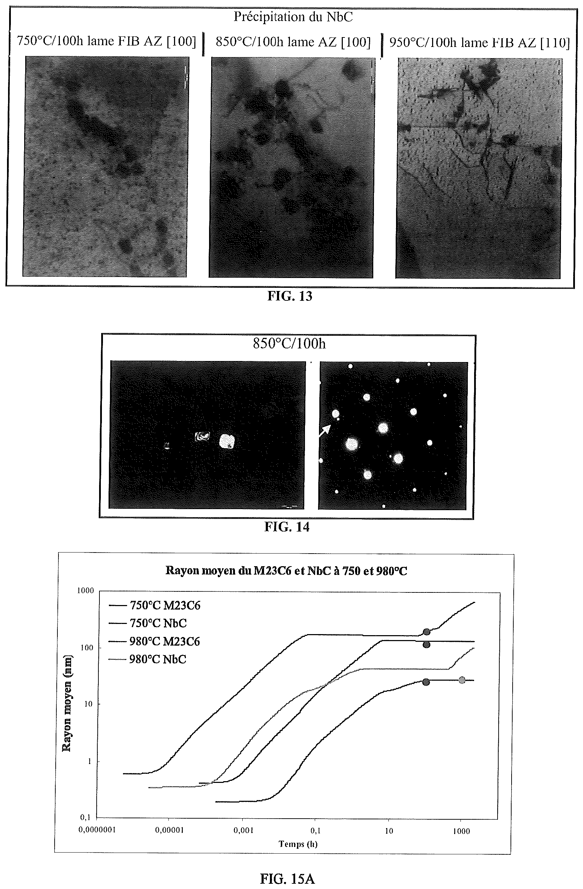

L'analyse fine des états vieillis met en évidence que la précipitation secondaire est constituée de deux populations de précipités : du M₂₃C₆ (Figure 12) et du NbC (Figures 13-14). Le M₂₃C₆ croit dans l'austénite dans un rapport d'orientation cube en cube. Les deux phases sont de type cubique à faces centres. Les plans cristallographiques de type {100} de l'austénite sont parallèles aux plans {100} du M₂₃C₆. Le paramètre de maille du M₂₃C₆ étant environ trois fois plus important que celui de l'austénite, les taches de diffraction provenant des plans de type {200} du M₂₃C₆ découpent en trois la distance entre deux taches provenant des plans de même type de l'austénite. Les précipités du M₂₃C₆ sont semi cohérents avec la matrice. La présence de dislocations à l'interface matrice/précipité accommode la distorsion élastique due au désaccord paramétrique. Les précipités du M₂₃C₆, souvent sous forme de cubes, font typiquement de 100 à 500nm.

La deuxième population de précipités est constituée de très fins carbures de niobium, typiquement de 50 nm. Cette précipitation a été observée dans les microstructures vieillies à 700-850°C pendant 100 heures et à 980°C pendant 1000 heures. Comme le carbure M₂₃C₆, le NbC précipite dans un rapport d'orientation cube en cube dans l'austénite (Figure 14). Il est très souvent observé sur des lignes de dislocations.

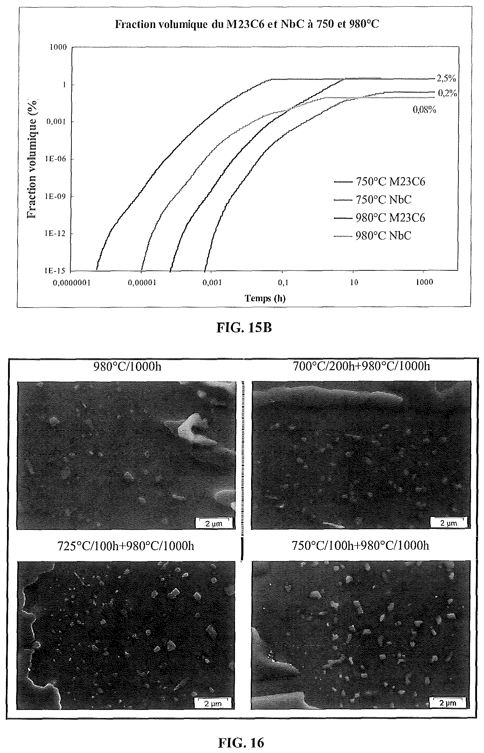

Etant donné que la précipitation secondaire est constituée de deux populations de précipités, l'évolution du rayon moyen de ces précipités et leur fraction dans le temps à 750 et 980°C ont été simulés à l'aide du logiciel PRISMA (Figures 15A et 15B).

Le PRISMA permet de modéliser la germination, la croissance et la coalescence des phases secondaires en conditions isothermes, dans des systèmes complexes. Les points sur les courbes représentant l'évolution du rayon moyen correspondent aux résultats expérimentaux. Notons que la fraction volumique du M₂₃C₆ à 750 et 980°C est de 2.5%, le rayon moyen du M₂₃C₆ à 980°C étant plus important qu'à 750°C.

La Figure 16 présente une comparaison des microstructures qui ont subi un pré traitement avant le traitement à 980°C durant 1000h avec une microstructure vieillie à 980°C durant 1000h sans un prétraitement préalable. La densité de précipités est plus importante dans les microstructures pré traitées (Tableau 4). Dans le cas de la microstructure ayant subi un traitement 750°C/100h+980°C/1000h le nombre de précipités a augmenté de 63% par rapport à l'état 980°C/1000h. En effet; une augmentation de nombre de précipités procure un affinement de la microstructure.

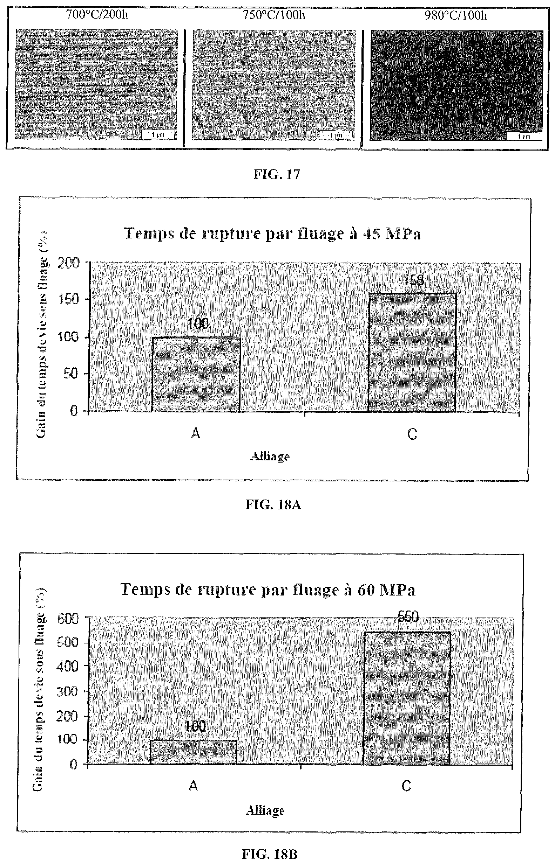

La Figure 17 présente trois microstructures vieillies à 700, 750 et 980°C. Les images ont été prises à proximité d'anciens carbures primaires où la densité de précipités est la plus élevée. Au bout de 100 heures à 980°C les précipités ne sont pas nombreux et par rapport aux états vieillis à 700 et 750°C leur taille est importante. De plus, comme l'a montré la diffraction de rayons X, au bout de 100h à 750°C et 200h à 700°C la transformation M₇C₃ → M₂₃C₆ n'est pas achevée.

Les images du microscope électronique à transmission révèlent la présence de précipités de carbures de Cr ou de Nb. Ces précipités secondaires nanométriques doivent être formés dans des clusters agissant comme sites de précipitation hétérogènes.

Une telle microstructure spécifique n'est obtenue que si le processus de fabrication et le traitement thermique correspondant sont très bien maîtrisés. Une telle microstructure spécifique est illustrée par les Figures 12 et 13.

La Figure 12 correspond à l'image obtenue par un microscope électronique à transmission (MET) de la précipitation secondaire de carbure riche en Cr type M₂₃C₆ d'un échantillon de l'alliage C après des traitements thermiques à des températures 725°C, 750°C et 850°C pendant 100 h. On observe des tailles de précipités nanométriques.

La Figure 13 correspond à l'image obtenue par un microscope électronique à transmission (MET) de la précipitation secondaire de carbure riche en Nb type MC d'un échantillon de l'alliage C après des traitements thermiques à des températures 750°C, 850°C et 950°C pendant 100 h. On observe des tailles de précipités nanométriques précipités sur des lignes et cluster de dislocations.

La présence de précipités nanométriques permet de stabiliser la microstructure des alliages et par conséquent d'améliorer le fluage et la résistance mécanique ce qui contribuera à augmenter la durée de vie du tube dans les conditions de travail.

Un tube de reformage comprenant un alliage tel que précédemment décrit, peut être utilisé pour la production de gaz de synthèse.

La meilleure résistance au fluage et la meilleure résistance mécanique de l'alliage produit selon le procédé de l'invention sont illustrées par la Figure 17.

L'alliage A correspond à l'alliage C avant amélioration. Cet alliage A est disponible dans le commerce à l'état de coulée avec la composition chimique présentée par le Tableau 3. Les Figures 18A et 18B montrent que la résistance au fluage est augmentée de 158% quand une contrainte de 45 MPa est exercée et de 550% quand une contrainte de 60 MPa est exercée.

**Tableau 3. Compositions chimiques (en poids %) d'alliages type HP commercialement disponibles et de l'alliage C (commercial) utilisé dans cette invention.**

| **Spécification d'alliage** | | **C** | **Ni** | **Cr** | **Si** | **Mn** | **Mo** | **Nb** | **Ti** | **P** | **S** | **Fe** | **Référence** |
|---|---|---|---|---|---|---|---|---|---|---|---|---|---|
| **HPNb** | min. | 0,38 | 34 | 24 | 0.50 | 0.50 | | 0.50 | | | | balance | [1] |
| | max. | 0,45 | 37 | 27 | 1.50 | 1.50 | 0.50 | 1.50 | | 0.04 | 0.04 | | |
| **Centralloy G4852 Micro R** | nom. | 0,45 | 35 | 25 | 0.80 | 1.00 | | 1.00 | add. | | | balance | [2] |
| **Manaurite XMR** | min. | 0,35 | 33 | 23 | 1.00 | 0.50 | | | add. | | | balance | [3] |
| | max. | 0,50 | 38 | 28 | 1.20 | 1.00 | | | | | | | |
| **KHR35CT** | min. | 0,45 | 33 | 24 | | | | 0.40 | add. | <0.03 | <0.03 | balance | [4] |
| | max. | 0,75 | 37 | 27 | 2.00 | 2.00 | 0.50 | 1.00 | | | | | |
| **MTEK 25-35MA** | min. | 0,35 | 33 | 23 | | | | 0,50 | | | | | |
| | max. | 0,55 | 37 | 27 | 2,00 | 1,50 | 0,50 | 1,25 | | | | balance | [5] |
| **Alliage C** | | **0,45** | **34,1** | **25,5** | **0,92** | **0,74** | **0,05** | **0,69** | **0,048** | **0,018** | **0,003** | **balance** | |

**Tableau 4 Rayon moyen et nombre des précipités dans quatre microstructures vieillies à 980°C pendant 1000 heures avec ou sans un pré traitement thermique.**

| **Traitement** | **Rayon moyen (µm)** | **Nombre de précipités** |
|---|---|---|
| 980°C/1000h | 0.19 | 1233 |
| 700°C/192+980°C/1000h | 0.18 | 1314 ↑6% |
| 725°C/100h+980°C/1000h | 0.18 | 1457 ↑18% |
| 750°C/100h+980°C/1000h | 0.19 | 2008 ↑63% |

## Revendications

1. Procédé de fabrication d'un alliage de fer, de nickel et de chrome, pour tube de reformeurs, comprenant de 22 à 30% en poids de Cr, de 20% à 45% en poids de Ni, de 0,3 à 0,6% en poids de C et présentant une microstructure avec une matrice austénitique telle que :
i) des précipités primaires micrométriques sous la forme de carbures de type M₂₃C₆ avec M=Fe, Ni ou Cr et/ou de type M (C,N) avec M=Nb ou Ti se forment pendant la solidification de l'alliage ;
ii) des précipités secondaires nanométriques sous la forme de carbures de type M₂₃C₆ avec M=Fe, Ni ou Cr et de type M (C,N) avec M=Nb ou Ti se forment pendant la mise en service du tube ; et
iii) une quantité de précipités intermétalliques de type Ni₁₆Si₇Nb₆ comprise entre 0,1 et 0,3 % se forme pendant l'utilisation du tube,
ledit procédé comprenant un traitement thermique dudit alliage réalisé en deux étapes :
a) une première étape de traitement thermique à des températures entre 700°C et 800°C avec un palier de 10h à 100h, et
b) une deuxième étape de traitement thermique sous conditions opératoires du four du reformage ayant pour source une source d'hydrocarbures et subissant une pression variant entre 1 et 4 MPa, et une température comprise entre 900°C et 1000°C.

2. Procédé selon la revendication 1, **caractérisé en ce que** les précipités secondaires forment des clusters de dislocations.

3. Procédé selon la revendication 2, **caractérisé en ce que** les précipités secondaires sont compris entre 5 nm et 50 nm, de préférence entre 10 nm et 20 nm.

4. Procédé selon l'une des revendications 1 à 3, **caractérisé en ce que** les précipités primaires de type M₂₃C₆ représentent 3 à 8% de la composition chimique de l'alliage et les précipités de M(C,N) représentent 0,5 à 2,5% de la composition chimique de l'alliage.

5. Procédé selon l'une des revendications 1 à 4, **caractérisé en ce que** les précipités secondaires de type M₂₃C₆ représentent 1 à 3% de la composition chimique de l'alliage et les précipités de M(C,N) représentent 0,1 à 0,5 % de la composition chimique de l'alliage.

## Patentansprüche

1. Verfahren zur Herstellung einer Legierung aus Eisen, Nickel und Chrom für Reformerrohre, bestehend aus 22 bis 30 Gew.-% Cr, 20 bis 45 Gew.-% Ni, 0,3 bis 0,6 Gew.-% C und die eine Mikrostruktur mit einer austenitischen Matrix präsentiert, so dass:
i) mikrometrische Primämiederschläge in Form von M₂₃C₆ Typ Karbide mit M=Fe, Ni oder Cr und/oder Typ M (C,N) mit M=Nb oder Ti entstehen bei der Erstarrung der Legierung;
ii) nanometrische Sekundämiederschläge in Form von M₂₃C₆ Typ Karbide mit M=Fe, Ni oder Cr und vom Typ M(C,N) mit M=Nb oder Ti werden bei der Inbetriebnahme des Rohres gebildet; und
iii) eine Menge Ni₁₆Si₇Nb₆ Typ intermetallische Niederschläge zwischen 0,1 und 0,3 % entstehen bei der Verwendung der Tube,
wobei der Prozess eine Wärmebehandlung der Legierung umfasst, die in zwei Stufen durchgeführt wird:
a) ein erster Wärmebehandlungsschritt bei Temperaturen zwischen 700°C und 800°C mit einer Stufe von 10h bis 100h, und
b) ein zweiter Wärmebehandlungsschritt unter Betriebsbedingungen des Reformierungsofens, der eine Kohlenwasserstoffquelle als Quelle hat und einem zwischen 1 und 4 MPa variierenden Druck und einer Temperatur zwischen 900 °C und 1000 °C ausgesetzt ist.

2. Verfahren nach Anspruch 1, **dadurch gekennzeichnet, dass** die Sekundämiederschläge Cluster von Versetzungen bilden.

3. Verfahren nach Anspruch 2, **dadurch gekennzeichnet, dass** die Sekundärniederschläge zwischen 5 nm und 50 nm, vorzugsweise zwischen 10 nm und 20 nm, liegen.

4. Verfahren nach einem der Ansprüche 1 bis 3, **dadurch gekennzeichnet, dass** die Primämiederschläge vom Typ M₂₃C₆ sind, machen 3 bis 8 % der chemischen Zusammensetzung der Legierung aus und die Niederschläge von M(C,N) machen 0,5 bis 2,5 % der chemischen Zusammensetzung der Legierung aus.

5. Verfahren nach einem der Ansprüche 1 bis 4, **dadurch gekennzeichnet, dass** die Sekundämiederschläge vom Typ M₂₃C₆ sind, machen 1 bis 3 % der chemischen Zusammensetzung der Legierung aus und die Niederschläge von M(C,N) machen 0,1 bis 0,5 % der chemischen Zusammensetzung der Legierung aus.

## Claims

1. Process for manufacturing an alloy of iron, nickel and chromium, for reformer tubes, comprising from 22 to 30% by weight of Cr, from 20% to 45% by weight of Ni, from 0.3 to 0, 6% by weight of C and presenting a microstructure with an austenitic matrix such that:
i) micrometric primary precipitates in the form of M₂₃C₆ type carbides with M=Fe, Ni or Cr and/or type M (C,N) with M=Nb or Ti are formed during the solidification of the alloy;
ii) nanometric secondary precipitates in the form of M₂₃C₆ type carbides with M=Fe, Ni or Cr and M (C,N) type with M=Nb or Ti are formed during the commissioning of the tube; And
iii) a quantity of Ni₁₆Si₇Nb₆ type intermetallic precipitates comprised between 0.1 and 0.3% is formed during use of the tube,
said process comprising a heat treatment of said alloy carried out in two stages:
a) a first heat treatment step at temperatures between 700°C and 800°C with a stage of 10h to 100h, and
b) a second heat treatment step under operating conditions of the reforming furnace having as source a source of hydrocarbons and undergoing a pressure varying between 1 and 4 MPa, and a temperature between 900°C and 1000°C.

2. Method according to claim 1, **characterized in that** the secondary precipitates form clusters of dislocations.

3. Method according to claim 2, **characterized in that** the secondary precipitates are between 5 nm and 50 nm, preferably between 10 nm and 20 nm.

4. Method according to one of claims 1 to 3, **characterized in that** the primary precipitates of type M₂₃C₆ represent 3 to 8% of the chemical composition of the alloy and the precipitates of M(C,N) represent 0.5 to 2.5% of the chemical composition of the alloy.

5. Method according to one of claims 1 to 4, **characterized in that** the secondary precipitates of type M₂₃C₆ represent 1 to 3% of the chemical composition of the alloy and the precipitates of M(C,N) represent 0.1 to 0.5% of the chemical composition of the alloy.
